# EUROPÄISCHE PATENTANMELDUNG

(11) **EP 2 801 411 A1**
(43) Veröffentlichungstag der Anmeldung: **12.11.2014**
(21) Anmeldenummer: 14401052.7
(22) Anmeldetag: 05.05.2014
(51) Int. Cl.: B05B 1/16, B05B 1/30, F16K 31/524, F16K 11/16

(54) **Mehrfachdüsenkörper**

(30) Priorität: 07.05.2013 DE 102013104675
(71) Anmelder: Amazonen-Werke H. Dreyer GmbH & Co. KG, 49205 Hasbergen (DE)
(72) Erfinder: Austermann, Stefan, 48291 Telgte (DE); Dembeck, Achim, 49191 Belm (DE)

(57) **Zusammenfassung**

Mehrfachdüsenkörper mit mehreren Ausbringdüsen zur Anordnung an der Flüssigkeitsleitung einer landwirtschaftliche Feldspritze, wobei die Flüssigkeitsleitung mit der Zuleitung des Mehrfachdüsenkörpers verbindbar ist, wobei die Zuleitung (4) in einem Verteilerraum (6) ausmündet, wobei von dem Verteilerraum (6) mehrere jeweils zu einer Ausbringdüse führende Verbindungsleitungen (7) abzweigen, wobei in dem Verteilerraum (6) jeweils einer Verbindungsleitung (7) zugeordnetes als Absperrventil (11) ausgebildetes Absperrelement (10) zugeordnet ist, wobei mittels der über ein schaltbares Betätigungselement (12) betätigbare Absperrelemente (10) der Absperrventile (11) ein oder mehrere Verbindungsleitungen (7) mit der Zuleitung (4) wahlweise verbindbar und/oder ihr gegenüber absperrbar sind, wobei das Betätigungselement (12) mehrere Schaltnocken (21, 22) aufweist und um eine Drehachse (24) in unterschiedliche Schaltstellungen drehbar ist, wobei die Absperrelemente (10) kugelartig ausgebildet und in ihrer Absperrstellung abdichtend in einem einen schräg verlaufende Ringabschnitt aufweisenden Ventilsitz (13) angeordnet sind, wobei die kugelartigen Absperrelemente (10) in zumindest annähernd senkrechter Richtung zur Drehachse (24) des Betätigungselementes (12) über den Ringabschnitt des Ventilsitzes aus dem Ventilsitz (13) in eine den Durchfluss zu der jeweiligen Verbindungsleitung (7) frei gebende Stellung bewegbar sind. Um eine Verringerung der Stellkräfte zur Verlagerung des kugelartigen Absperrelementes aus dem Ventilsitz (13) zu erreichen ist, vorgesehen, dass der jeweilige Schaltnocken (21, 22) zumindest in dem mit den kugelartigen Absperrelementen (10) in Wirkverbindung stehenden Bereich eine der Berührungsbahn des kugelartigen Absperrelementes (10) an dem Schaltnocken (21, 22) entsprechend verlaufende Betätigungsbahn mit einem schrägen das kugelartige Absperrelement (10) zumindest teilweise untergreifenden Flächenabschnitt aufweist.

## Beschreibung

Die Erfindung betrifft einen Mehrfachdüsenkörper gemäß des Oberbegriffes des Patentanspruches 1.

Eine derartige Flüssigkeitsleitung mit zugeordnetem Düsenkörper ist in der DE 10 2010 036 437 A1 beschrieben. Hier zweigt von der Flüssigkeitsleitung in einem Abzweigungsbereich eine Verbindungsleitung zu der zumindest einen Ausbringdüse des Düsenkörpers ab. Der Abzweigleitung ist zumindest ein Absperrelement aufweisendes Absperrventil zugeordnet. Das Absperrelement ist jeweils kugelartig ausgebildet und wird jeweils mittels einer Druckfeder in seinen Ventilsitz gedrückt. Um die jeweilige Verbindungsleitung zur Ausbringdüse frei zu geben wird das kugelartige Absperrelement durch die aufrechte Seitenfläche eines oder mehrerer Schaltnocken eines verdrehbaren Betätigungselementes zur Seite gedrückt. Durch die senkrecht zur Bewegungsrichtung verlaufende Seitenfläche sind relativ große Stellkräfte erforderlich.

Der Erfindung liegt die Aufgabe zugrunde, eine Verringerung der Stellkräfte zur Verlagerung des kugelartigen Absperrelementes aus dem Ventilsitz zu erreichen.

Diese Aufgabe wird erfindungsgemäß dadurch gelöst, dass der jeweilige Schaltnocken zumindest in dem mit den kugelartigen Absperrelementen in Wirkverbindung stehenden Bereich eine der Berührungsbahn des kugelartigen Absperrelementes an dem Schaltnocken entsprechend verlaufende Betätigungsbahn mit einem schrägen das kugelartige Absperrelement zumindest teilweise untergreifenden Flächenabschnitt aufweist.

Infolge dieser Maßnehmen ist der Betätigungsbereich des Schaltnockens optimiert ausgestaltet und an die Berührungsbahn zwischen dem jeweiligen Schaltnocken und dem jeweiligen kugelartigen Absperrelement angepasst. Durch den schrägen, das kugelartige Absperrelement zumindest teilweise unter greifenden Flächenabschnitt wird das kugelartige Absperrelement unterstützend bei dessen Verschieben zur Freigabe des Durchflusses der Flüssigkeit durch die Verbindungsleitung zur Ausbringdüse angehoben. Durch den schrägen Flächenabschnitt wird somit das kugelartige Absperrelement unterstützend aus dem Ventilsitz herausgehoben. Hierdurch sind geringere Stellkräfte erforderlich, um das kugelartige Absperrelement aus dem Ventilsitz herauszuschieben. Der schräge Flächenabschnitt hebt das kugelartige Absperrelement schaufelartig aus dem Ventilsitz heraus.

Um eine möglichst geringe und optimierte Betätigungsfläche zum zur Seite Schieben des kugelartige Absperrelemente zu schaffen, ist vorgesehen, dass der jeweilige Schaltnocken zumindest in dem mit den kugelartigen Absperrelementen in Wirkverbindung stehenden Bereich eine an den kugelartigen Verlauf der kugelartigen Absperrelemente zumindest teilweise angepassten Bereich aufweist. Hierdurch entstehen nur sehr geringe Reibkräfte zwischen dem Schaltnockens des Betätigungselementes und dem kugelartigen Absperrelement.

In einfacher Weise lässt sich der schräge, das kugelartige Absperrelement zumindest teilweise untergreifende Flächenabschnitt dadurch schaffen, dass der zumindest teilweise angepasste Bereich des Schaltnockens einen phasenartigen Verlauf oder einen phasenartig verlaufenden Bereich aufweist.

Um eine ausreichende anhebende Wirkung zum Anheben des kugelartigen Absperrelementes aus dem Ventilsitz durch den schrägen Flächenabschnitt des Betätigungselementes zu erreichen, ist vorgesehen, dass der zumindest teilweise angepasste und phasenartig verlaufende Bereich des jeweiligen Schaltnockens unter einem Winkel zwischen 30 und 60 Grad zur Drehachse des die mehreren Schaltnocken aufweisenden Betätigungselementes verläuft.

Eine einfache Ausgestaltung des Betätigungselementes ergibt sich dadurch, dass das Betätigungselement scheibenartig ausgebildet ist.

Eine vorteilhafte Ausgestaltung des Betätigungselementes in dem Bereich, in den das Betätigungselement das kugelartige Absperrelement berührt, wird dadurch erreicht, dass die Berührungsbahn als wulstartige Führungsbahn ausgebildet ist.

Ein besonders einfaches Verschieben des kugelartigen Absperrelementes durch das Betätigungselement wird dadurch erreicht, dass die Berührungsbahn so ausgebildet ist, dass das kugelartige Absperrelement durch die die Berührungsbahn zumindest teilweise unterstützend aus dem Ventilsitz hebbar ist.

Weitere Einzelheiten der Erfindung sind der Beispielsbeschreibung und den Zeichnungen zu entnehmen. Die Zeichnungen zeigen
- Fig. 1: den Mehrfachdüsenkörper in perspektivischer Ansicht,
- Fig. 2: den Mehrfachdüsenkörper in der Seitenansicht,
- Fig. 3: den Mehrfachdüsenkörper im Bereich der Flüssigkeitsleitung in der Ansicht III - III,
- Fig. 4: den Mehrfachdüsenkörper im Bereich der Flüssigkeitsleitung und im Abzweigbereich der Abzweigleitung in der Ansicht IV - IV,
- Fig. 5: den Mehrfachdüsenkörper in der Vorderansicht,
- Fig. 6: den Mehrfachdüsenkörper in der Ansicht VI - VI,
- Fig. 7: den Mehrfachdüsenkörper in der Seitenansicht,
- Fig. 8: den Mehrfachdüsenkörper in der Ansicht VIII - VIII,
- Fig. 9: den Mehrfachdüsenkörper in der Ansicht IX - IX,
- Fig. 10: den Mehrfachdüsenkörper in der Ansicht X - X mit einer anderen Schaltstellung der Betätigungsscheibe,
- Fig. 11: die Zuordnung der Druckfedern mit den Zwischenstücken zu den Ventilkugeln mit dem schaltbaren Betätigungselement in perspektivischer Darstellung,
- Fig. 12: die Zuordnung der Druckfedern mit den Zwischenstücken zu den Ventilkugeln mit dem schaltbaren Betätigungselement in Explosionsdarstellung und
- Fig. 13: die Zuordnung der Druckfedern mit den Zwischenstücken zu den Ventilkugeln im Schnitt XIII - XIII.

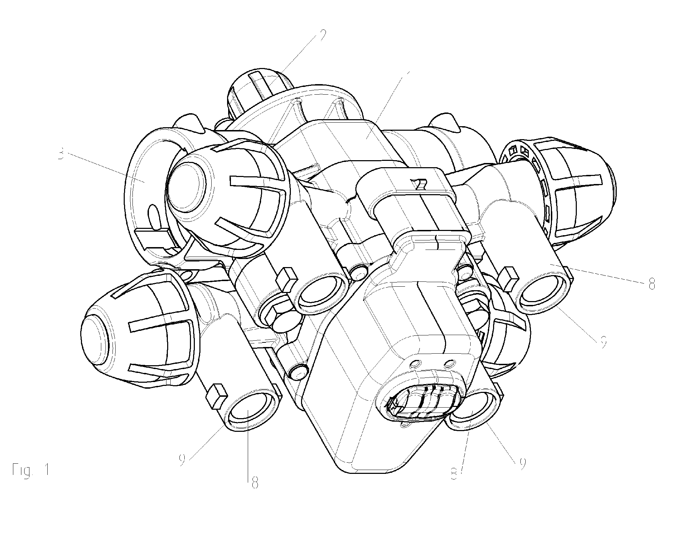

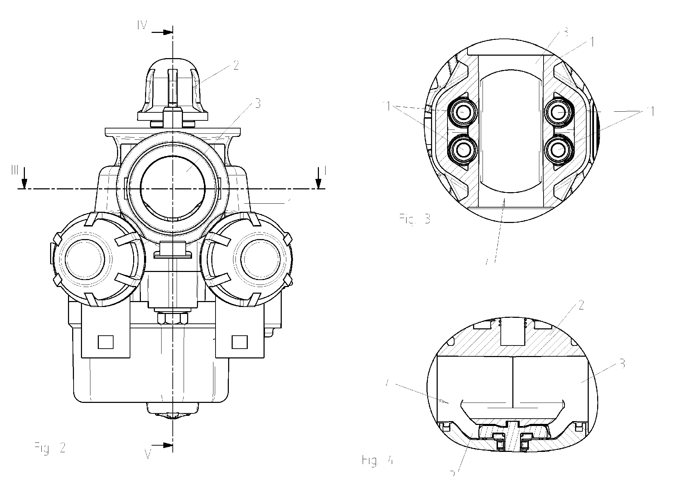

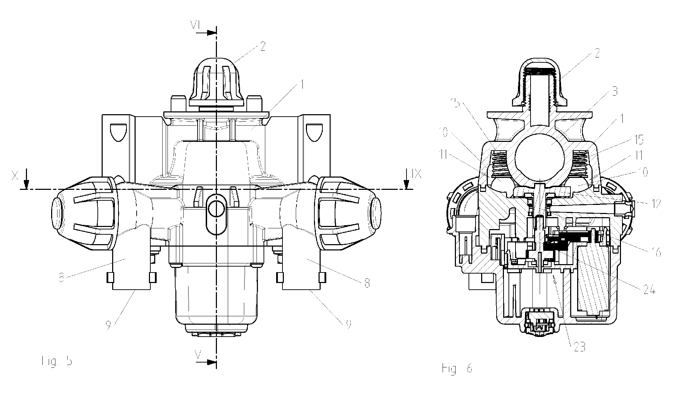

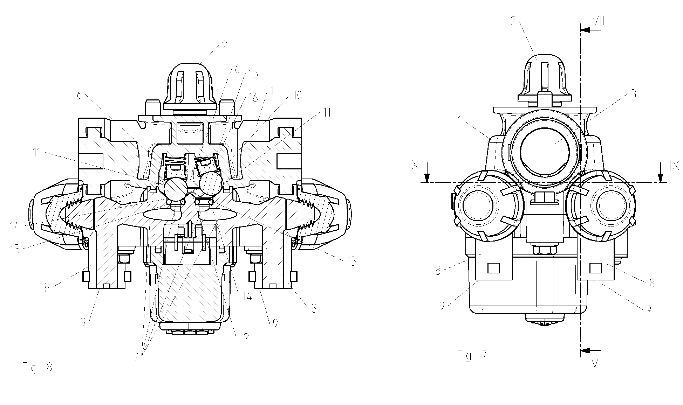

Der Mehrfachdüsenkörper gemäß den Fig. 1 bis 10 weist das Gehäuse 1 auf. An dem Gehäuse ist das Befestigungsmittel 2 angeordnet, mit welchem der Mehrfachdüsenkörper an Rahmenelementen, Verteilergestänge, etc. befestigt werden kann. Im oberen Bereich des Gehäuses 1 des Mehrfachdüsenkörpers ist ein Teil 3 der Flüssigkeitsleitung, an welcher der Mehrfachdüsenkörper anschließbar ist, angeordnet. Über diese Flüssigkeitsleitung, die beispielsweise an einem Verteilergestänge einer landwirtschaftlichen Feldspritze angeordnet ist, ist dem jeweiligen Mehrfachdüsenkörper die auszubringende Flüssigkeit zuzuführen.

Die Flüssigkeitsleitung 3 ist mit der in dem Gehäuse 1 in einem Abzweigbereich 4 angeordneten Abzweigleitung 5 verbunden. Die Abzweigleitung 5 mündet in dem in dem Gehäuse 1 angeordneten Verteilerraum 6 aus. Von diesem Verteilerraum 6 führen, gemäß des Ausführungsbeispiels, vier Verbindungsleitungen 7, die die Verlängerung der Abzweigleitung 5 bilden, zu in dem Gehäuse 1 angeordneten Ausbringleitungen 8, an deren Enden 9 in nicht dargestellter Weise mittels Überwurfmuttern Ausbringdüsen in bekannter Weise angeordnet sind.

Die Verbindungsleitungen 7 sind im Bereich des Verteilerraumes 6 mittels als Absperrelemente 10 aufweisende Absperrventile 11 abzusperren. Über diese Absperrelemente 10 sind die Verbindungsleitungen 7 mit der Zuleitung 5 wahlweise verbindbar und/oder ihr gegenüber absperrbar. Die Absperrelemente 10 sind über schaltbare Betätigungselemente 12 betätigbar und somit in die jeweilige Absperr- oder Durchflussposition zu bringen.

Die Absperrventile 11 weisen jeweils einen in dem Gehäuse 1 angeordneten Ventilsitz 13, dem jeweils ein als Dichtring 14 ausgebildeter Ringabschnitt zugeordnet ist, auf. Die Absperrelemente 10 sind kugelartig, im Ausführungsbeispiel als Kugeln ausgebildet. Wenn die Ventilkugeln 10 sich im Ventilsitz 13 befinden, wirken sie in dieser Absperrstellung mit dem Dichtring 14 des Ventilsitzes 13 abdichtend zusammen. Den Kugeln 10 sind Druckfedern 15 zugeordnet, mittels welchem sie in Richtung des Ventilsitzes 13 gedrückt werden.

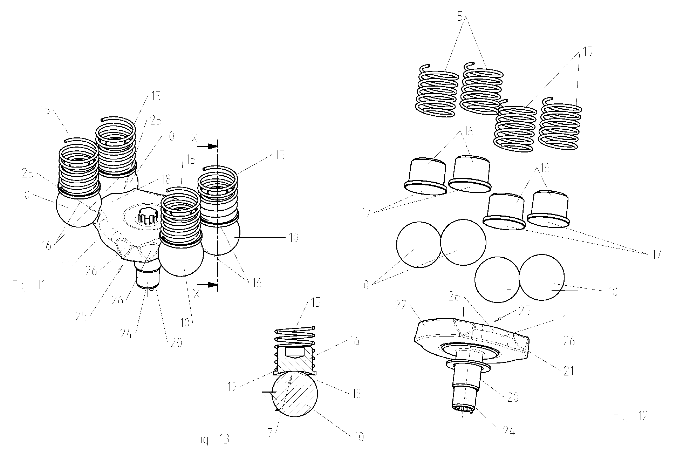

Zwischen der jeweiligen Druckfeder 15 und der jeweiligen Kugel 10 ist ein Zwischenstück 16 angeordnet, wie insbesondere den Fig. 12 und 13 zu entnehmen ist. Die an der Ventilkugel 10 anliegende Fläche 17 des Zwischenstückes 16 ist im inneren Bereich 18 vertieft gegenüber dem äußeren Umfangsbereich 19 ausgebildet ist, wie der Fig. 13 besonders gut zu entnehmen ist. Hierdurch ist die an der Kugel 10 anliegende Fläche 17 des Zwischenstückes 16 die Ventilkugel 10 zumindest teilweise umgreifend und/oder formschlüssig ein- und erfassend ausgebildet. Um dieses zu erreichen ist im Ausführungsbeispiel die an der Ventilkugel 10 anliegende Fläche 17 des Zwischenstückes 16 konkav ausgebildet ist.

Die an der Ventilkugel 10 anliegende Fläche 17 des Zwischenstückes 16 weist eine einem Kugelabschnitt ähnliche Ausgestaltung auf und der Radius der an der Ventilkugel 10 anliegenden konkaven Fläche 17 des Zwischenstückes 16 ist mindestens das 1,5-fache, vorzugsweise das 2 bis 5-fache größer als der Radius der Ventilkugeln 16.

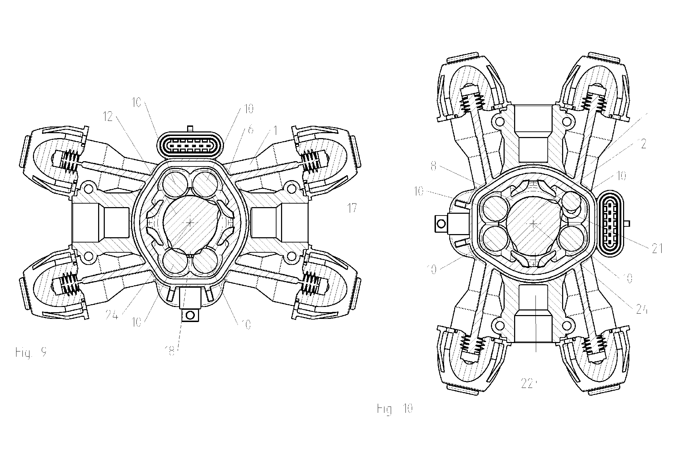

Das schaltbare Betätigungselement 12 ist scheibenartig ausgebildet und drehfest mit einer in dem Gehäuse 1 gelagerten Schaltwelle 20 verbunden. Das Betätigungselement 12 weist mehrere Schaltnocken 21, 22, wie die Fig. 9 und 10 zeigen, auf. Gemäß des Ausführungsbeispiels weist das Betätigungselement 12 zwei Schaltnocken 21, 22 auf. Die Schaltwelle 20 des Betätigungselementes 12 ist mit einem motorischen Stellelement 23, welches als Elektromotor ausgebildet ist, drehfest verbunden und somit über das motorische Stellelement um seine Drehachse verdrehbar.

Einer der beiden Schaltnocken 21 ist so ausgestaltet, dass er nur ein als Kugel 10 ausgebildetes Ventilelement aus dem Ventilsitz 13 drücken kann, so dass der

Durchfluss zu einer Verbindungsleitung 7 frei gegeben ist. Der andere der beiden Schaltnocken 22 ist so ausgestaltet, dass er zwei nebeneinander angeordnete als Kugeln 10 ausgebildete Absperrelemente gleichzeitig in eine den Durchfluss in die jeweiligen Verbindungsleitungen 7 freigebenden Stellung bewegen kann, das heißt, dass er gleichzeitig zwei als Kugeln 10 ausgebildete Ventilelemente aus ihren Ventilsitzen 13 drücken kann.

Das Betätigungselement 12 mit den beiden Schaltnocken 21, 22 ist in unterschiedliche Positionen verdrehbar, wie dies für einige mögliche Positionen in den Fig. 9 und 10 dargestellt ist. Wie hieraus ersichtlich ist, werden je nach Schaltstellung des Betätigungselementes 12 der Durchfluss für keine, eine oder mehrere Verbindungsleitungen 7 zu den Ausbringdüsen führenden Ausbringleitungen 8 freigegeben. Somit können wahlweise keiner, einer oder mehrerer Verbindungsleitungen 7 und somit Ausbringdüsen in unterschiedlicher Kombination die auszubringende Flüssigkeit zugeleitet werden.

Die Schaltnocken 21, 22 des scheibenartigen Betätigungselementes 12 wirken mit einer zu der Drehachse 24 des Betätigungselementes 12 etwa senkrechten Richtung etwa auf Höhe der Mitte der Kugeln 10 der Absperrventile 9 auf die Kugeln 10 ein und drücken in diese in der zu der Drehachse 24 senkrechten Richtung über die als Dichtringe 15 ausgebildeten Ringabschnitte des jeweiligen Ventilsitzes 13 aus dem Ventilsitz 13 in eine den Durchfluss zu der jeweiligen Verbindungsleitung 7 freigebenden Stellung.

Deer jeweilige Schaltnocken 21, 22 weist zumindest in dem mit den Ventilkugeln 10 in Wirkverbindung stehenden Bereichen 25 eine der Berührungsbahn der Ventilkugeln 10 an den Schaltnocken 21, 22 entsprechend verlaufende Betätigungsbahn mit einem schrägen die Ventilkugeln 10 zumindest teilweise untergreifenden Flächenabschnitten 26 auf.

Der jeweilige Schaltnocken 21, 22 weist zumindest in dem mit den Ventilkugeln 10 in Wirkverbindung stehenden Bereichen 25 eine an den kugelartigen Verlauf der Ventilkugeln 10 zumindest teilweise angepassten Bereich 25 auf.

Dieser zumindest teilweise angepasste Bereich 25 des Schaltnockens 21, 22 weist einen phasenartigen Verlauf oder phasenartig verlaufenden Bereich auf.

Der zumindest teilweise angepasste und phasenartig verlaufende Bereich 25 des jeweiligen Schaltnockens 21, 22 verläuft unter einem Winkel zwischen 30 und 60 Grad zur Drehachse 24 des die mehreren Schaltnocken 21, 22 aufweisenden scheibenartigen Betätigungselementes 12.

Die Berührungsbahn kann als wulstartige Führungsbahn ausgebildet sein.

Um die Ventilkugeln 10 in unterstützender Weise aus dem Ventilsitz 13 in schaufelartiger Weise heraus zu heben, ist die Berührungsbahn so ausgebildet ist, dass die Ventilkugeln 10 durch die die Berührungsbahn zumindest teilweise unterstützend aus dem Ventilsitz 13 heraushebbar sind. Hierdurch sind die von dem Betätigungselement 12 oder den Schaltnocken 21, 22 aufzubringenden Stellkräfte zum Verschieben der Ventilkugeln 10 aus dem Ventilsitz 13 nur sehr gering.

## Patentansprüche

1. Mehrfachdüsenkörper mit mehreren Ausbringdüsen zur Anordnung an der Flüssigkeitsleitung einer landwirtschaftliche Feldspritze, wobei die Flüssigkeitsleitung mit der Zuleitung des Mehrfachdüsenkörpers verbindbar ist, wobei die Zuleitung in einem Verteilerraum ausmündet, wobei von dem Verteilerraum mehrere jeweils zu einer Ausbringdüse führende Verbindungsleitungen abzweigen, wobei in dem Verteilerraum jeweils einer Verbindungsleitung zugeordnetes als Absperrventil ausgebildetes Absperrelement zugeordnet ist, wobei mittels der über ein schaltbares Betätigungselement betätigbare Absperrelemente der Absperrventile ein oder mehrere Verbindungsleitungen mit der Zuleitung wahlweise verbindbar und/oder ihr gegenüber absperrbar sind, wobei das Betätigungselement mehrere Schaltnocken aufweist und um eine Drehachse in unterschiedliche Schaltstellungen drehbar ist, wobei die Absperrelemente kugelartig ausgebildet und in ihrer Absperrstellung abdichtend in einem einen schräg verlaufende Ringabschnitt aufweisenden Ventilsitz angeordnet sind, wobei die kugelartigen Absperrelemente in zumindest annähernd senkrechter Richtung zur Drehachse des Betätigungselementes über den Ringabschnitt des Ventilsitzes aus dem Ventilsitz in eine den Durchfluss zu der jeweiligen Verbindungsleitung frei gebende Stellung bewegbar sind, **dadurch gekennzeichnet, dass** der jeweilige Schaltnocken (21, 22) zumindest in dem mit den kugelartigen Absperrelementen (10) in Wirkverbindung stehenden Bereichen (25) eine der Berührungsbahn des kugelartigen Absperrelementes (10) an dem Schaltnocken (21, 22) entsprechend verlaufende Betätigungsbahn mit einem schrägen das kugelartige Absperrelement (10) zumindest teilweise untergreifenden Flächenabschnitt (26) aufweist.

2. Mehrfachdüsenkörper nach Anspruch 1, **dadurch gekennzeichnet, dass** der jeweilige Schaltnocken (21, 22) zumindest in dem mit den kugelartigen Absperrelementen (10) in Wirkverbindung stehenden Bereich (25) eine an den kugelartigen Verlauf der kugelartigen Absperrelemente (10) zumindest teilweise angepassten Bereich (26) aufweist.

3. Mehrfachdüsenkörper nach zumindest einem der vorstehenden Ansprüche, **dadurch gekennzeichnet, dass** der zumindest teilweise angepasste Bereich (26) des Schaltnockens (21, 22) einen phasenartigen Verlauf aufweist.

4. Mehrfachdüsenkörper nach zumindest einem der vorstehenden Ansprüche, **dadurch gekennzeichnet, dass** der zumindest teilweise angepassten Bereich (26) des Schaltnockens (21, 22) einen phasenartig verlaufenden Bereich aufweist.

5. Mehrfachdüsenkörper nach zumindest einem der vorstehenden Ansprüche, **dadurch gekennzeichnet, dass** der zumindest teilweise angepasste und fasenartig verlaufende Bereich (26) des jeweiligen Schaltnockens (21, 22) unter einem Winkel zwischen 30 und 60 Grad zur Drehachse (24) des die mehreren Schaltnocken (21, 22) aufweisenden Betätigungselementes (12) verläuft.

6. Mehrfachdüsenkörper nach Anspruch 1, **dadurch gekennzeichnet, dass** das Betätigungselement (21) scheibenartig ausgebildet ist.

7. Mehrfachdüsenkörper nach zumindest einem der vorstehenden Ansprüche, **dadurch gekennzeichnet, dass** die Berührungsbahn als wulstartige Führungsbahn ausgebildet ist.

8. Mehrfachdüsenkörper nach zumindest einem der vorstehenden Ansprüche, **dadurch gekennzeichnet, dass** die Berührungsbahn so ausgebildet ist, dass das kugelartige Absperrelement (10) durch die die Berührungsbahn zumindest teilweise unterstützend aus dem Ventilsitz (13) hebbar ist.
